(19) Europäisches Patentamt
European Patent Office
Office européen des brevets

(11) EP 0 885 650 B1

(12) EUROPÄISCHE PATENTSCHRIFT

(45) Veröffentlichungstag und Bekanntmachung des Hinweises auf die Patenterteilung:
**06.04.2005 Patentblatt 2005/14**

(51) Int Cl.[7]: **B01D 53/94**, B01J 37/02, B01J 23/63

(21) Anmeldenummer: **98111272.5**

(22) Anmeldetag: **18.06.1998**

(54) **Abgasreinigungskatalysator für Verbrennungsmotoren mit zwei katalytisch aktiven Schichten auf einem Tragkörper**

Exhaust gas purifying catalyst for combustion engines with two catalytically active layers on one support structure

Catalyseur pour purifier le gaz d'échappement de moteurs à combustion contenant deux couches catalytiquement actives sur un corps de support

(84) Benannte Vertragsstaaten:
**DE FR GB**

(30) Priorität: **20.06.1997 DE 19726322**

(43) Veröffentlichungstag der Anmeldung:
**23.12.1998 Patentblatt 1998/52**

(73) Patentinhaber: **Umicore AG & Co. KG**
**63457 Hanau-Wolfgang (DE)**

(72) Erfinder:
- **Lindner, Dieter, Dr.**
  **63457 Hanau (DE)**
- **van Yperen, Renee, Dr.**
  **3632 XC Loenen a/d Vecht (NL)**
- **Mussmann, Lothar, Dr.**
  **63067 Offenbach (DE)**
- **Lox, Egbert, Dr.**
  **63457 Hanau (DE)**
- **Kreuzer, Thomas, Dr.**
  **61184 Karben (DE)**

(74) Vertreter: **Stellbrink, Axel et al**
**Vossius & Partner**
**Siebertstrasse 4**
**81675 München (DE)**

(56) Entgegenhaltungen:

| | |
|---|---|
| **EP-A- 0 335 847** | **EP-A- 0 443 765** |
| **EP-A- 0 771 584** | **WO-A-93/09146** |
| **WO-A-95/00235** | **WO-A-95/35152** |
| **WO-A-96/40417** | **WO-A-97/43035** |
| **DE-A- 19 606 822** | |

EP 0 885 650 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die vorliegende Erfindung betrifft einen Abgasreinigungskatalysator für Verbrennungsmotoren mit zwei katalytisch aktiven Schichten auf einem Tragkörper.

Verbrennungskraftmaschinen emittieren als wesentliche Schadstoffe mit dem Abgas Kohlenmonoxid CO, unverbrannte Kohlenwasserstoffe HC und Stickoxide $NO_x$, die durch moderne Abgasreinigungskatalysatoren zu einem hohen Prozentsatz in die unschädlichen Komponenten Wasser, Kohlendioxid und Stickstoff umgesetzt werden. Die Umsetzung erfolgt im wesentlichen bei stöchiometrischen Bedingungen, das heißt, der im Abgas enthaltene Sauerstoff wird mit Hilfe einer sogenannten Lambda-Sonde so eingeregelt, daß die Oxidation von Kohlenmonoxid und Kohlenwasserstoffen sowie die Reduktion der Stickoxide zu Stickstoff nahezu quantitativ erfolgen kann. Die hierfür entwikkelten Katalysatoren werden als Dreiwegkatalysatoren bezeichnet.

Stöchiometrische Bedingungen liegen bei Luftzahlen $\lambda$ von 1 vor. Bei der Luftzahl $\lambda$ handelt es sich um das auf stöchiometrische Bedingungen normierte Luft/Kraftstoffverhältnis. Das Luft/Kraftstoffverhältnis gibt an, wieviel Kilogramm Luft für die vollständige Verbrennung von einem Kilogramm Treibstoff benötigt werden. Bei üblichen Ottomotor-Kraftstoffen liegt das stöchiometrische Luft/Kraftstoffverhältnis bei einem Wert von 14,6. Das Motorabgas weist je nach Last und Drehzahl mehr oder weniger starke, periodische Schwankungen der Luftzahl auf. Zur besseren Umsetzung der oxidierbaren Schadstoffkomponenten unter diesen Bedingungen werden Sauerstoffspeicherkomponenten wie zum Beispiel reines Ceroxid oder Ceroxid enthaltende Komponenten eingesetzt, die Sauerstoff binden, wenn er im Überschuß vorhanden ist und ihn für die oxidative Umsetzung wieder abgeben, wenn der Sauerstoff im Abgas im Unterschuß vorliegt.

Die vorliegende Erfindung befaßt sich mit Katalysatorbeschichtungen auf inerten, monolithischen Tragkörpern, insbesondere Wabenkörpern mit parallelen Strömungskanälen für das Abgas. Die Anzahl der Strömungskanäle pro Querschnittsfläche wird als Zelldichte bezeichnet. Je nach Anwendungserfordernis kommen inerte Tragkörper mit Zelldichten zwischen 10 und 250 $cm^{-2}$ zum Einsatz. Es kann sich dabei um extrudierte, keramische Tragkörper aus Cordierit, Mullit oder ähnlichen, temperaturbeständigen Materialien handeln. Alternativ werden Wabenkörper aus Stahlfolien verwendet.

Im Sinne der vorliegenden Erfindung wird eine Schicht als katalytisch aktiv bezeichnet, wenn sie in der Lage ist, die eingangs genannte Umsetzung der im Abgas von Verbrennungskraftmaschinen enthaltenen Schadstoffe zu unschädlichen Komponenten zumindest teilweise zu katalysieren. Zu den Schadstoffen zählen insbesondere Kohlenmonoxid, Stickoxide und Kohlenwasserstoffe, wobei die Kohlenwasserstoffe auch die auf Rußpartikeln des Abgases in kondensierter Form voliegenden Kohlenwasserstoffe umfassen.

Die katalytische Beschichtung enthält als katalytisch aktive Komponenten zumeist mehrere Edelmetalle der Platingruppe des periodischen Systems der Elemente sowie hochoberflächige Materialien und weitere Komponenten wie Sauerstoff speichernde Materialien, Promotoren und Stabilisatoren. Die Beschichtung wird unter Verwendung einer wäßrigen Beschichtungsdispersion, welche die verschiedenen Komponenten des Katalysators enthält, durch bekannte Beschichtungsverfahren auf die Innenwände der Strömungskanäle aufgebracht.

Die Komponenten des Katalysators können in verschiedener Form der Beschichtungsdispersion zugefügt werden:

a)als "feinteilige Feststoffe"
Hierunter werden pulverförmige Materialien mit Korngrößen zwischen 1 und etwa 50 µm verstanden. In der englischsprachigen Literatur werden hierfür die Ausdrücke bulk material" oder particulate material" verwendet.
b)als kolloidale Feststoffe"
Sie weisen Teilchengrößen von weniger als 1 µm auf. Die teilchenförmige Struktur der feinteiligen und der kolloidalen Feststoffe bleibt auch in der fertigen Katalysatorbeschichtung erhalten.
c)in Form löslicher Vorläuferverbindungen"
Die Vorläuferverbindungen werden auf in der Regel hochoberflächigen Feststoffen abgeschieden und durch thermische Behandlung in oxidativer oder reduktiver Atmosphäre in die eigentlichen katalysefördernden Komponenten überführt und liegen dann in hochdisperser Form mit Kristallitgrößen von in der Regel weniger als 10 nm vor. Bei extrem hoher Konzentration oder sehr geringer Löslichkeit können Vorläufersubstanzen auch zwischen den feinteiligen Feststoffen vorliegen und ähnliche Korngrößen wie letztere aufweisen.

Die feinteiligen Feststoffe der Beschichtungsdispersion dienen zum Teil als Trägermaterialien für die aus den Vorläuferverbindungen resultierenden hochdispersen Materialien. Die feinteiligen Feststoffe müssen zu diesem Zweck eine hohe spezifische Oberfläche aufweisen. Als hochoberflächig gelten im Rahmen dieser Erfindung Materialien mit einer spezifischen Oberfläche, auch BET-Oberfläche genannt, von mehr als 10 $m^2/g$. Die spezifische Oberfläche kann nach DIN 66132 mit Hilfe von Stickstoffadsorptionsisothermen gemessen werden.

Beispiele für hochoberflächige Feststoffe sind die sogenannten aktiven Aluminiumoxide. Es handelt sich dabei

um feinteilige Aluminiumoxide, welche die Kristallstrukturen der Übergangsphasen des Aluminiumoxids aufweisen. Hierzu gehören chi-, delta-, gamma-, kappa-, theta- und eta-Aluminiumoxid.

Die aktiven Aluminiumoxide weisen spezifische Oberflächen von bis zu 400 $m^2$/g auf. Mit steigender Temperatur wandeln sich die genannten Kristallstrukturen unter gleichzeitiger Verminderung der spezifischen Oberfläche ineinander um (siehe Ullmann's Encyclopedia of Industrial Chemistry; 5$^{th}$ Edition 1985; Vol A1; Seiten 557-563). Oberhalb von 1150°C ist nur das oberflächenarme alpha-Aluminiumoxid beständig. Dieser Prozeß kann durch Stabilisierung mit Erdalkalimetalloxiden, insbesondere Bariumoxid, Seltenerdoxiden, bevorzugt Lanthanoxid, oder Siliziumdioxid verlangsamt werden. Hierzu enthalten die stabilisierten, aktiven Aluminiumoxide gewöhnlich 1 bis 10 Gew.-% an Bariumoxid, Lanthanoxid oder Siliziumdioxid, bezogen auf das Gesamtgewicht des stabilisierten Materials.

Zur Unterscheidung der hochoberflächigen Trägermaterialien von dem inerten, monolithischen Träger für die Beschichtung wird dieser im Rahmen dieser Erfindung als Tragkörper bezeichnet, die hochoberflächigen Trägermaterialien dagegen als Träger oder Trägermaterialien.

Als Sauerstoff speichernde Materialien werden vielfach reines Ceroxid oder Mischoxide des Cers mit Zirkon eingesetzt. Die Mischoxide sind zum Beispiel durch Copräzipitation von Vorläuferverbindungen beider Elemente erhältlich. Es sind cerreiche Mischoxide mit mehr als 50 Gew.-% Cer sowie zirkonreiche Mischoxide mit mehr als 50 Gew.-% Zirkon bekannt. Cerreiche Mischoxide werden im folgenden als Cer/Zirkon-Mischoxide und zirkonreiche Mischoxide als Zirkon/Cer-Mischoxide bezeichnet.

Die EP 0 314 057 B1 beschreibt einen rhodiumfreien Dreiwegkatalysator, der auf einem Tragkörper zwei katalytisch aktive Schichten aufweist, wobei die erste, auf dem Tragkörper aufliegende Schicht, Platin und die zweite, obere Schicht, Palladium enthält. Als Trägermaterial für diese Komponenten wird in beiden Fällen aktives Aluminiumoxid eingesetzt. Die Schichten enthalten darüber hinaus noch Ceroxid, welches mittels eines Cersalzes und/oder einer festen Cerverbindung eingebracht wird. Die Schichten können zusätzlich noch Zirkonoxid, Lanthanoxid, Neodymoxid, Praseodymoxid und Nickeloxid als Einzelsubstanz oder im Gemisch enthalten. Die Edelmetalle werden durch Imprägnieren in die Schichten eingebracht. In analoger Weise beschreibt die EP 0 314 058 B1 einen platinfreien Dreiwegkatalysator, welcher aus zwei katalytisch aktiven Schichten auf einem Tragkörper besteht. Die erste Schicht enthält Palladium und die zweite Schicht enthält Rhodium. Als Trägermaterial dient in diesem Fall wieder aktives Aluminiumoxid. Beide Schichten enthalten zusätzlich Ceroxid sowie gegebenenfalls dieselben Promotoren und Stabilisatoren wie gemäß der EP 0 314 057 B1.

Die US 5,057,483 beschreibt ebenfalls eine Katalysatorzusammensetzung aus zwei diskreten Schichten auf einem monolithischen Tragkörper. Die erste Schicht enthält ein stabilisiertes Aluminiumoxid als Trägermaterial für Platin sowie feinteiliges Ceroxid. Die erste Schicht kann außerdem feinteiliges Eisenoxid und Nickeloxid zur Unterdrückung der Emission von Schwefelwasserstoff enthalten sowie über die ganze Schicht verteiltes, hochdisperses Bariumoxid und Zirkonoxid als thermische Stabilisatoren. Die zweite Schicht enthält ein co-gefälltes Cer/Zirkon-Mischoxid, auf dem Rhodium abgeschieden ist sowie ein aktiviertes Aluminiumoxid als Trägermaterial für Platin. Das cogefällte Zirkon/Cer-Mischoxid enthält bevorzugt 2 bis 30 Gew.-% Ceroxid.

Ein weiterer zweischichtiger Dreiwegkatalysator wird in der WO 95/35152 offenbart. Er enthält in der ersten Schicht ein erstes Trägermaterial und eine erste Palladiumkomponente und gegebenenfalls eine erste Platingruppenkomponente, gegebenenfalls wenigstens einen ersten Stabilisator, gegebenenfalls wenigstens eine erste Seltenerdmetallkomponente und gegebenenfalls eine Zirkonkomponente. Die zweite Schicht enthält ein zweites Trägermaterial, eine zweite Platinkomponente, eine Rhodiumkomponente, eine zweite Sauerstoff speichernde Komponente in verdünnter Form und gegebenenfalls eine Zirkonkomponente.

Die EP 0 734 757 A1 offenbart einen katalytischen Konverter mit den drei Platingruppenmetallen Platin, Palladium und Rhodium. Der Katalysator besteht aus zwei Schichten auf einem Tragkörper. Gemäß der EP-Schrift wurde gefunden, daß die Umsetzungsgrade für die Schadstoffe verbessert werden, wenn Palladium sich in der inneren Schicht und Platin und Rhodium sich in der äußeren Schicht befinden. Außerdem werden die Umsetzungsgrade verbessert, wenn die Massen der beiden Schichten (innere Schicht zu äußerer Schicht) sich wie 3 : 1 bis 1,25 : 1 verhalten.

Das Dokument WO-A-9309146 beschreibt einen Katalysator mit zwei katalytisch aktiven Schichten auf einem Träger, wobei die erste Schicht feinteilige Feststoffe, hochdisperses Kalziumoxid sowie Pt enthält.

Die zukünftigen gesetzlichen Abgasgrenzwerte unterliegen einer zunehmenden Verschärfung. Die derzeit gültigen und für die Zukunft vorgeschlagenen Grenzwerte z. B. der E.U. für die einzelnen Schadstoffe sind in Tabelle 1 aufgelistet. Die Grenzwerte müssen bei der Durchführung des MVEG-A Fahrzyklus mit Kaltstart, Beschleunigungs- und Teillastfahrten eingehalten werden.

Tabelle 1

| Derzeitige und zukünftig vorgeschlagene Grenzwerte für Schadstoffemissionen | | | |
|---|---|---|---|
| Schadstoff | Grenzwerte*) [g/km] | | |
| | 1996/97 | 2000/01 | 2005/06 |
| CO | 2,7 | 2,3 | 1,0 |
| HC + $NO_x$ | 0,5 | | |
| HC | | 0,2 | 0,1 |
| $NO_x$ | | 0,15 | 0,08 |

*) Diese Werte sind bei Durchführung des MVEG-A Fahrzyklus einzuhalten

Gemäß Tabelle 1 ist geplant, die Grenzwerte für Kohlenmonoxid, Kohlenwasserstoffe und Stickoxide bis zum Jahr 2005 auf etwa ein Drittel der im Jahre 1996 gültigen Grenzwerte zu vermindern. Solche Verbesserungen sind nur möglich, wenn es gelingt, die katalytische Aktivität der derzeit bekannten Katalysatoren noch weiter zu steigern. Dies ist bei dem bisher schon erreichten hohen Aktivitätsniveau der Katalysatoren nur durch eine sorgfältige Auswahl der Katalysatorkomponenten und ihre Abstimmung aufeinander möglich.

Von besonderer Bedeutung ist auch die Steigerung der Temperaturstabilität der katalytischen Aktivität, denn ein wesentlicher Anteil der Emissionen während des MVEG-A Fahrzyklus werden in der Kaltstartphase während der ersten 120 Sekunden nach Start des Motors emittiert. Zur Verminderung der Kaltstartemissionen werden motornah eingebaute Start- und Hauptkatalysatoren verwendet, die sehr schnell von den heißen Abgasen auf ihre Anspringtemperaturen erwärmt werden, aber auch während des normalen Fahrbetriebs mit Spitzentemperaturen am Katalysatoreintritt von bis zu 1050°C belastet werden. Aufgabe der vorliegenden Erfindung ist es daher, einen Katalysator anzugeben, der verglichen mit bekannten Katalysatoren eine höhere Aktivität und Temperaturstabilität aufweist. Darüber hinaus sollen diese Ziele mit einem möglichst geringen Edelmetalleinsatz, das heißt möglichst kostengünstig erreicht werden.

Diese Aufgabe wird durch einen Abgasreinigungskatalysator nach Auspruch 1 gelöst.

Im erfindungsgemäßen Katalysator bilden die Platingruppenmetalle die eigentlichen katalytisch aktiven Komponenten. Zu den Platingruppenmetallen zählen Platin, Palladium, Rhodium, Osmium und Iridium. Sie liegen im Katalysator in hochdisperser Form mit Partikelgrößen von in der Regel unter 10 nm vor. Der Begriff Platingruppenmetalle und die Bezugnahme auf die einzelnen Platingruppenmetalle selber umfaßt im Rahmen der vorliegenden Erfindung alle katalytisch aktiven Erscheinungsformen dieser Metalle. Dabei handelt es sich neben dem metallischen Zustand auch um höhere Oxidationsstufen dieser Metalle. Bevorzugt werden in der ersten Schicht des Katalysators Palladium und gegebenenfalls Platin eingesetzt.

Die zweite katalytisch aktive Schicht des Katalysators, welche direkt mit dem Abgas in Kontakt steht, kann entsprechend der gewünschten katalytischen Funktion unterschiedlich aufgebaut sein. Zur Erzielung eines guten Dreiwegkatalysators hat sich ein Schichtaufbau der zweiten Schicht bewährt, der wie die erste Schicht ebenfalls mehrere feinteilige Feststoffe und mindestens ein Platingruppenmetall enthält, wobei die feinteiligen Feststoffe dieser zweiten Schicht wenigstens ein feinteiliges, Sauerstoff speicherndes Material und wenigstens eine weitere feinteilige Komponente aufweisen und nur ein Teil dieser feinteiligen Feststoffe der zweiten Schicht als Träger für die Platingruppenmetalle der zweiten Schicht dienen.

Im Rahmen dieser Erfindung wird zwischen "feinteiligen Komponenten" und "feinteiligen, Sauerstoff speichernden Materialien" unterschieden. In beiden Fällen handelt es sich um feinteilige Feststoffe. Im Unterschied zu den Sauerstoff speichernden Materialien weisen die feinteiligen Komponenten keine wesentliche Sauerstoffspeicherfähigkeit auf. Sowohl die feinteiligen Komponenten als auch die feinteiligen, Sauerstoff speichernden Materialien dienen im Katalysator teilweise auch als Trägermaterialien. Bei den feinteiligen Komponenten kann es sich um Oxide der Erdalkalimetalle, um Oxide von Scandium, Yttrium, Gallium, Indium, Silizium, Titan, Zirkon, Hafnium, Germanium, Zinn, Blei, Vanadium, Niob, Tantal, Chrom, Molybdän und Wolfram handeln. Darüber hinaus können Carbide, Boride, Silizide und Nitride der Übergangsmetalle verwendet werden. Bevorzugt werden jedoch Oxide, insbesondere aktive Aluminiumoxide, eingesetzt. Weiterhin können auch Mischoxide wie Aluminiumsilikate und Titanate (Barium- oder Aluminiumtitanat) und Zeolithe als feinteilige Komponenten zur Anwendung kommen.

Gemäß dem derzeitigen Verständnis der Erfindung, wird die Temperaturbeständigkeit der Gesamtbeschichtung durch die angegebene Anordnung der Bestandteile der ersten Schicht zueinander wesentlich erhöht. Die Anordnung zeichnet sich dadurch aus, daß die Platingruppenmetalle der ersten Schicht mit allen Bestandteilen dieser Schicht in enger Berührung stehen, das heißt sowohl mit allen feinteiligen Feststoffen der Schicht als auch mit allen Anteilen

der hochdispersen Materialien. Um dies zu erreichen, müssen besondere Maßnahmen bei der Herstellung der ersten Schicht beachtet werden, die weiter unten eingehend beschrieben werden. Die Temperatur- und Alterungsbeständigkeit der Gesamtbeschichtung wird weiterhin dadurch verbessert, daß die Platingruppenmetalle in der zweiten Schicht nur auf einem Teil der feinteiligen Komponenten abgeschieden sind. Der unbeschichtete Teil kann so als Adsorber für Katalysatorgifte dienen. Zu diesem Zweck sollte in der zweiten Schicht das Massenverhältnis der als Träger für die Platingruppenmetalle dienenden Feststoffanteile zu den restlichen Feststoffanteilen der zweiten Schicht zwischen 1 : 10 und 5 : 1, bevorzugt zwischen 1 : 4 und 1 : 1 liegen. Das zweckmäßigste Massenverhältnis hängt von dem Aufbau und der Zusammensetzung beider Schichten des Katalysators sowie von der mittleren Zusammensetzung des Abgases ab. Mit zunehmender Verdünnung (abnehmende Massenverhältnisse) der mit den Platingruppenmetallen beschichteten Trägerpartikel in der zweiten Schicht verschlechtert sich der Kontakt des durch die zweite Schicht hindurchdiffundierenden Abgases mit diesen katalytisch aktiven Zentren. Massenverhältnisse unter 1 : 10 sind daher in der Regel nicht mehr empfehlenswert. Mit zunehmenden Massenverhältnissen nimmt dagegen die für die Adsorption von Katalysatorgiften zur Verfügung stehende Menge der platinmetallfreien Feststoffanteile ab. Das Massenverhältnis sollte daher kleiner als 5 : 1 gehalten werden.

In einer speziellen Ausführungsform der Erfindung wird in der ersten Schicht als feinteiliges, Sauerstoff speicherndes Material ein hochoberflächiges Ceroxid und in der zweiten Schicht ein cerreiches Cer/Zirkon-Mischoxid verwendet. In beiden Schichten wird als feinteilige Komponente Aluminiumoxid eingesetzt. Als Platingruppenmetalle dienen in der ersten Schicht Palladium und gegebenenfalls Platin, während in der zweiten Schicht Rhodium und gegebenenfalls Platin eingesetzt werden. Als Träger für Rhodium und gegebenenfalls Platin dient ein Teil des aktiven Aluminiumoxids der zweiten Schicht.

In der ersten Schicht des Katalysators werden ein oder mehrere hochdisperse Erdalkalimetalloxide wie zum Beispiel Magnesiumoxid, Bariumoxid und Calciumoxid zur Stabilisierung verwendet. Bevorzugt wird jedoch in allen Ausführungsformen der Erfindung Bariumoxid als einiges Erdalkalimetalloxid eingesetzt.

Zur Sicherstellung einer hohen Temperaturstabilität der katalytischen Aktivität des Rhodiums und des gegebenenfalls anwesenden Platins ist es vorteilhaft, wenigstens für denjenigen Teil des Aluminiumoxids, welcher als Träger für Rhodium und gegebenenfalls Platin dient, ein stabilisiertes Aluminiumoxid einzusetzen. Das restliche Aluminiumoxid kann ebenfalls stabilisiert sein. Zur Stabilisierung des Aluminiumoxids können alle bekannten Stabilisierungskomponenten verwendet werden. Bevorzugt wird ein mit Lanthanoxid stabilisiertes Aluminiumoxid eingesetzt.

Eine weitere vorteilhafte Ausführungsform des Katalysators sieht gegenüber der vorhergehenden Ausführungsform vor, daß in der ersten Schicht statt des hochoberflächigen Ceroxids ein feinteiliges Cer/Zirkon-Mischoxid und zusätzlich zu den hochdispersen Erdalkalimetalloxiden noch Ceroxid und Zirkonoxid in hochdisperser Form in der ersten Schicht vorliegen. Wie in der vorhergehenden Ausführungsform werden als Platingruppenmetalle in der ersten Schicht Palladium und gegebenenfalls Platin und in der zweiten Schicht Rhodium und gegebenenfalls Platin eingesetzt. Rhodium und gegebenenfalls Platin werden wie schon bei den vorhergehenden Ausführungsformen nur auf einem Teil des Aluminiumoxids der zweiten Schicht abgeschieden. Auch hier ist es zur Erhöhung der Temperaturstabilität des Katalysators empfehlenswert, zumindest den Teil des aktiven Aluminiumoxids der zweiten Schicht, der als Träger für Rhodium und gegebenenfalls Platin dient, zu stabilisieren. Das aktive Aluminiumoxid der ersten Schicht kann ebenfalls stabilisiert sein. Als einziges Erdalkalimetalloxid wird Bariumoxid verwendet.

Alternativ zu der soeben besprochenen Ausführungsform kann in der zweiten Schicht als Träger für Rhodium und gegebenen-falls Platin statt ein Teil des aktiven Aluminiumoxids auch das Cer/Zirkon-Mischoxid verwendet werden.

Eine weitere Erhöhung der Temperaturstabilität des Katalysators wird erzielt, wenn das Cer/Zirkon-Mischoxid in einer oder beiden Katalysatorschichten gemäß der nicht vorveröffentlichten Patentanmeldung DE 197 14 707.0 mit 0,1 bis 10 Gew.-% Praseodymoxid gegenüber thermischen Belastungen stabilisiert ist. Alternativ kann in der zweiten Schicht anstelle des aktiven Aluminiumoxids das Cer/Zirkon-Mischoxid als Trägermaterial für Rhodium und gegebenfalls Platin verwendet werden. In diesem Fall ist die Stabilisierung des Cer/Zirkon-Mischoxids mit Praseodymoxid besonders vorteilhaft.

Bei den in den bisher behandelten Ausführungsformen des erfindungsgemäßen Katalysators verwendeten feinteiligen, Sauerstoff speichernden Materialien handelte es sich entweder um reines Ceroxid oder um cerreiche Cer/Zirkon-Mischoxide mit einem Gehalt an Ceroxid von 60 bis 90, bevorzugt von 70 Gew.-%, bezogen auf das Gesamtgewicht des Mischoxids. Diese Materialien sind kommerziell erhältlich. Sie weisen eine spezifische Oberfläche zwischen 60 und 200 $m^2/g$ auf, die relativ stabil gegenüber Temperaturbelastungen ist. Alternativ oder in Ergänzung hierzu können feinteilige, zirkonreiche Zirkon/Cer-Mischoxide mit einem Gehalt an Ceroxid von 10 bis 30, bevorzugt 20 Gew.-%, bezogen auf das Gesamtgewicht des Mischoxids, eingesetzt werden. Die Herstellung und Verwendung eines solchen Materials wird zum Beispiel in der schon zitierten US 5,057,483 beschrieben.

Diese letzteren, zirkonreichen Mischoxide sind gegenüber Temperaturbelastungen stabiler als die cerreichen Mischoxide, weisen jedoch eine geringere Speicherfähigkeit für Sauerstoff auf. Dieser Mangel kann dadurch kompensiert werden, daß sie in größeren Mengen angewendet werden.

Ein Nachteil der cerreichen sowie der zirkonreichen Mischoxide ist die Tatsache, daß das Ceroxid im Innern

der Mischoxide nur in eingeschränktem Maße für die Sauerstoffspeicherung zur Verfügung steht. Eine bessere Verfügbarkeit des Ceroxids für die Sauerstoffspeicherung bietet ein Material gemäß der nicht vorveröffentlichten Patentanmeldung DE 197 14 707.0. Es handelt sich dabei um ein pulverförmiges Zirkonoxid. Auf der Oberfläche der Pulverteilchen ist Ceroxid aufgebracht. Hierdurch steht der volle Ceroxidanteil des Materials für die Sauerstoffspeicherung zur Verfügung.

Weitere vorteilhafte Ausführungsformen des Katalysators sehen vor, daß in die erste und gegebenenfalls in die zweite Schicht zur Unterdrückung von Schwefelwasserstoffemissionen noch feinteiliges Nickeloxid eingebracht wird.

Die erste Schicht des Katalysators wird mit einer Konzentration von 100 bis 300 g/l Tragkörpervolumen auf den Tragkörper aufgebracht, während für die zweite Schicht Konzentrationen von 40 bis 150 g/l Tragkörpervolumen vorgesehen sind. Für die einzelnen Komponenten der Schichten haben sich folgende Konzentrationsbereiche als vorteilhaft erwiesen: Die feinteiligen Komponenten der ersten Schicht stellen die Hauptkomponenten der Schicht dar und werden in Konzentrationen von 60 bis 150 g/l angewendet. Die feinteiligen, Sauerstoff speichernden Materialien werden jeweils mit 20 bis 100 g/l Tragkörpervolumen in die Beschichtung eingebracht. Für das Erdalkalimetalloxid reichen zur Stabilisierung der Beschichtung Mengen von 10 bis 40 g/l aus. Für die gegebenenfalls zusätzlich anwesenden hochdispersen Materialien Ceroxid und Zirkonoxid haben sich Konzentrationen von jeweils 10 bis 70 g/l bewährt.

Die zweite Schicht ist wesentlich dünner als die erste Schicht. Sie wird nur mit etwa 25 bis 75, bevorzugt 30 bis 50 %, der Beschichtungsmenge der ersten Schicht auf den Tragkörper aufgebracht. Die feinteiligen, Sauerstoff speichernden Komponenten der zweiten Schicht werden jeweils in Konzentrationen von 5 bis 70 g/l angewendet.

Die Platingruppenmetalle der ersten Schicht werden in einer Konzentration von 0,1 bis 5 Gew.-%, bezogen auf das Gesamtgewicht der ersten Schicht, in die Schicht eingebracht. Bezogen auf das Tragkörpervolumen entspricht dies einer Konzentration von bis zu 15 g/l. Die Platingruppenmetalle der zweiten Schicht werden, bezogen auf das jeweilige Trägermaterial, in Konzentrationen von 0,1 bis 10, bevorzugt von 0,1 bis 5 Gew.-%, eingesetzt. Es hat sich gezeigt, daß der erfindungsgemäße Katalysator mit gleichen oder geringeren Edelmetallkonzentrationen wie in kommerziell erhältlichen Katalysatoren eine bessere oder zumindest gleichwertige katalytische Aktivität aufweist.

Das Massenverhältnis der Platingruppenmetalle zueinander kann in relativ weiten Bereichen variieren. Bei Verwendung von Platin, Palladium und Rhodium haben sich Massenverhältnisse von Platin zu Rhodium von 3 : 1 bis 1 : 3 bewährt. Bevorzugt wird jedoch ein Massenverhältnis nahe um 1 : 1 herum angewendet. Palladium wird in wesentlich größeren Mengen eingesetzt. Bevorzugt liegt sein Massenverhältnis zu Platin im Bereich zwischen 10 : 1 und 20 : 1. Bei Anwesenheit von Platin im Katalysator wird es bevorzugt nur alternativ in den beiden Schichten eingesetzt: entweder gemeinsam mit Palladium in der ersten Schicht oder gemeinsam mit Rhodium in der zweiten Schicht. Wird auf Platin im Katalysator verzichtet, so sind Massenverhältnisse zwischen Palladium und Rhodium zwischen 10 : 1 und 1 :2 anwendbar. Bevorzugt werden Massenverhältnisse kleiner 5 : 1 verwendet, die eine gute katalytische Aktivität für die Umsetzung aller drei Schadstoffarten ermöglichen.

Wesentlich für den erfindungsgemäßen Katalysator ist die Tatsache, daß die Platingruppenmetalle (Palladium und gegebenenfalls Platin), die Erdalkalimetalloxide und gegebenenfalls Ceroxid und Zirkonoxid in hochdisperser Form auf den feinteiligen Komponenten und auf den feinteiligen, Sauerstoff speichernden Materialien der ersten Schicht abgeschieden sind. Hierdurch wird die katalytische Aktivität und Stabilität des Katalysators deutlich erhöht.

Die Abscheidung der hochdispersen Feststoffe auf den feinteiligen Feststoffen kann auf verschiedene Weisen verwirklicht werden: So besteht die Möglichkeit, zunächst aus den feinteiligen Feststoffen eine wäßrige Beschichtungsdispersion anzufertigen und damit einen Katalysator-Tragkörper zu beschichten. Nach Trocknen und Kalzinieren der Beschichtung wird sie mit einer wäßrigen Lösung von Vorläuferverbindungen der Platingruppenmetalle und der Erdalkalimetalloxide imprägniert, erneut getrocknet und kalziniert. Alternativ hierzu können die Vorläuferverbindungen der Platingruppenmetalle und der Erdalkalimetalloxide schon der wäßrigen Beschichtungsdispersion der feinteiligen Feststoffe zugegeben werden. Eine weitere Möglichkeit besteht darin, nur die Vorläuferverbindungen der Erdalkalimetalloxide der Beschichtungsdispersion zuzugeben, den Tragkörper zu beschichten und die Beschichtung erst anschließend mit den Vorläuferverbindungen der Edelmetalle zu imprägnieren.

Bei zusätzlicher Verwendung hochdispersen Ceroxids und Zirkonoxids in der ersten Schicht werden diese Oxide in einem vorgelagerten Arbeitsgang auf die feinteiligen Feststoffe der ersten Schicht aufgebracht. Hierzu werden die Vorläuferverbindungen von Ceroxid, Zirkonoxid und der Erdalkalimetalloxide in Wasser gelöst. In dieser Lösung werden die feinteiligen Feststoffe (feinteilige Komponenten und Sauerstoff speichernde Verbindungen) dispergiert. Die Dispersion wird dann entwässert, getrocknet und vorkalziniert. Das vorkalzinierte Pulver wird, wie schon oben beschrieben, für die Anfertigung der ersten katalytisch aktiven Schicht verwendet.

Die vorstehende Beschreibung umfaßt nur einige mögliche Verfahrensschritte zur Herstellung der ersten Schicht des Katalysators. Es sind weitere, unterschiedliche Kombinationen von Imprägnierschritten, Adsorptionsschritten und Vorkalzinierungen zur Herstellung der Schicht möglich. Wichtig ist, daß das gewählte Verfahren gewährleistet, daß in der fertigen Schicht die Platingruppenmetalle mit allen Bestandteilen der Schicht in enger Berührung stehen. Hierzu ist es notwendig, in einem letzten Arbeitsschritt die Vorläuferverbindungen der Platingruppenmetalle allein oder

gemeinsam mit noch verbliebenen Vorläuferverbindungen der anderen hochdispersen Komponenten in die Beschichtungsdispersion oder in die schon auf dem Tragkörper abgeschiedene Schicht einzubringen.

Wesentlich für die zweite Schicht ist, daß Rhodium und gegebenenfalls Platin nur auf einem Teil der feinteiligen Bestandteile der zweiten Schicht abgeschieden werden. Hierbei kann es sich um einen Teil der insgesamt für die zweite Schicht vorgesehenen Menge des Aluminiumoxids handeln oder um einer der Sauerstoff speichernden Feststoffe. Hierdurch wird gewährleistet, daß stets eine ausreichende Menge edelmetallfreien Aluminiumoxids als Giftfänger in der zweiten Schicht vorliegt. Um dies zu erreichen, wird der als Trägermaterial für Rhodium und gegebenenfalls Platin vorgesehene Anteil der feinteiligen Feststoffe separat mit den Edelmetallen imprägniert, zwischengetrocknet und vorkalziniert, bevor mit dem so gewonnenen Pulver und den restlichen, feinteiligen Feststoffen die Beschichtungsdispersion für die zweite Schicht angefertigt wird. Auf Zwischentrocknung und Vorkalzination kann verzichtet werden, wenn zunächst mit dem als Trägermaterial vorgesehenen Teil der feinteiligen Feststoffe eine wäßrige Dispersion angefertigt wird, zu der eine Lösung der Vorläuferverbindungen der Edelmetalle zugegeben wird. Erst nach einer Wartezeit von wenigstens 30 Minuten, in der die Vorläuferverbindungen auf dem Trägermaterial adsorbiert werden, werden die restlichen, feinteiligen Feststoffe zur Fertigstellung der Beschichtungsdispersion hinzugefügt. Voraussetzung für diese kostengünstige Variante der Herstellung der Beschichtungsdispersion ist, daß die gewählten Vorläuferverbindungen der Edelmetalle leicht von dem Trägermaterial adsorbiert werden können. Gut geeignet hierfür sind die Nitrate der Edelmetalle.

Abgesehen von dieser Einschränkung können alle üblichen Vorläuferverbindungen der Platingruppenmetalle für die Herstellung des erfindungsgemäßen Katalysators verwendet werden. Als Vorläuferverbindungen für das Erdalkalimetalloxid und Ceroxid sowie Zirkonoxid werden bevorzugt Acetate und Nitrate verwendet.

Die im Vorstehenden angesprochenen Trocken- und Kalzinierungsschritte werden an Luft bei Temperaturen von 120 bis 180°C (Trocknung) und bei Temperaturen zwischen 250 und 500°C (Kalzination) vorgenommen. Die Kalzinationstemperaturen müssen die Zersetzung der Vorläuferverbindungen und ihre Überführung in die eigentlichen katalysefördernden Komponenten gewährleisten. Im Falle von Barium, Cer und Zirkon handelt es sich dabei um Bariumoxid, Ceroxid und Zirkonoxid in hochdisperser Form. Die Platingruppenmetalle liegen nach der Kalzination zum Teil in metallischer Form und zum Teil auch in höheren Oxidationsstufen vor.

Während des Betriebs werden die Katalysatoren auf Temperaturen bis zu 1050°C erwärmt. Die Überführung der Vorläuferverbindugen in die eigentlichen katalysefördernden Komponenten kann daher einer Formierungsphase während der Inbetriebnahme eines Kraftfahrzeuges überlassen bleiben. Die während der Katalysatorherstellung notwendigen Trocken- und Kalzinierungsschritte haben dann nur die Aufgabe, die jeweilige Beschichtung vor dem nächsten Verfahrensschritt auf dem Tragkörper zu fixieren und wasserlösliche Verbindungen in unlösliche Verbindungen zu überführen. Gegebenenfalls kann daher auf alle oder einige der Kalzinierungsschritte verzichtet werden.

Einige vorteilhafte Verfahrensvarianten zur Herstellung des Katalysators werden durch die Ansprüche 23 bis 28 beschrieben.

Einige Ausführungsformen des erfindungsgemäßen Katalysators werden im folgenden mit einem Katalysator gemäß der WO 95/35152 verglichen. Zur Anfertigung der Katalysatoren wurden die folgenden Rohstoffe verwendet:

| | |
|---|---|
| **La/$Al_2O_3$:** | γ-Aluminiumoxid, stabilisiert mit 2 bis 4 Gew.-% Lanthan, berechnet als Lanthanoxid;<br>BET-Oberfläche: 140 $m^2/g$; |
| **γ-$Al_2O_3$:** | reines gamma-Aluminiumoxid;<br>BET-Oberfläche: 140 $m^2/g$;<br>anfängliche Korngröße: $d_{50} \approx 15$ µm; |
| **$CeO_2$:** | reines, hochoberflächiges Ceroxid;<br>BET-Oberfläche: 100 $m^2/g$;<br>anfängliche Korngröße: $d_{50} \approx 10$ µm; |
| **$CeO_2/ZrO_2$:** | co-gefälltes Cer/Zirkon-Mischoxid;<br>Gehalt an Ceroxid: 70 Gew.-%;<br>BET-Oberfläche: 60 $m^2/g$;<br>anfängliche Korngröße: $d_{50} \approx 30$ µm; |
| **$ZrO_2/CeO_2$:** | co-gefälltes Zirkon/Cer-Mischoxid;<br>Gehalt an Zirkonoxid: 80 Gew.-%;<br>BET-Oberfläche: 50 $m^2/g$;<br>anfängliche Korngröße: $d_{50} \approx 3$ µm; |

| | |
|---|---|
| **$CeO_2/ZrO_2/Pr_6O_{11}$:** | hochdisperses $Pr_6O_{11}$ auf Cer/Zirkon-Mischoxid mit 67 Gew.-% Ceroxid, 28 Gew.-% Zirkonoxid und 5 Gew.-% Praseodymoxid;<br>BET-Oberfläche: 60 $m^2/g$;<br>anfängliche Korngröße: $d_{50} \approx 17$ µm; |
| **$Ce(C_2H_3O_2)_3$:** | Ceracetat |
| **$ZrO(C_2H_3O_2)_2$:** | Zirkonylacetat |
| **$Ba(C_2H_3O_2)_2$:** | Bariumacetat |
| **NiO:** | Nickeloxid;<br>BET-Oberfläche: 20 $m^2/g$;<br>anfängliche Korngröße: $d_{50} \approx 14$ µm; |
| **Katalysator-Tragkörper:** | Cordierit; 62 Zellen/$cm^2$<br>Volumen: 1,67 l<br>Abmessungen: 118,4 mm ∅; 152,4 mm Länge |

Die Temperaturstabilität der katalytischen Aktivität des Katalysators wird wesentlich durch die relative Anordnung der Bestandteile der ersten Schicht zueinander beeinflußt. Dieser gefundene Sachverhalt wurde in Vorversuchen überprüft. Hierzu wurden Katalysator-Tragkörper jeweils nur mit der ersten Schicht des Katalysators beschichtet. Als Platingruppenmetall wurde nur Palladium eingestzt, welches in unterschiedlicher relativer Anordnung zu den restlichen Bestandteilen der Schicht eingebracht wurde. Zu den restlichen Bestandteilen gehörte stabilisiertes Aluminiumoxid, Cer/Zirkon-Mischoxid, Nickeloxid, sowie hochdisperses Ceroxid, Zirkonoxid und Bariumoxid.

In Vorversuch 1 wurde die erfindungsgemäße Anordnung gewählt, das heißt, Palladium wurde in enge Berührung mit allen restlichen Bestandteilen der Schicht gebracht. In Vorversuch 2 wurde Palladium nur auf Aluminiumoxid abgeschieden und in Vorversuch 3 wurde Palladium jeweils zur Hälfte auf Aluminiumoxid und auf Cer/Zirkon-Mischoxid abgeschieden.

## Vorversuch 1

Es wurde eine wäßrige Beschichtungsdispersion angestzt, welche bezogen auf Aluminiumoxid noch 30 Gew.-% Cer/Zirkon-Mischoxid, 30 Gew.-% Ceroxid als Ceracetat, 30 Gew.-% Zirkonoxid als Zirkonylacetat, 20 Gew.-% Bariumoxid als Bariumacetat und 4,3 Gew.-% Nickeloxid enthielt. Die Beschichtungsdispersion wurde durch Mahlen sorgfältig homogenisiert. Die fertige Beschichtungsdispersion wies einen Feststoffgehalt von 34 Gew.-% und eine mittlere Korngröße der feinteiligen Feststoffe von etwa 2 bis 4 µm auf.

Der Tragkörper wurde durch einmaliges Tauchen in diese Beschichtungsdispersion beschichtet, bei 120°C 0,5 Stunden lang an Luft getrocknet und für die Dauer von 4 Stunden bei 500°C an Luft kalziniert. Danach wurde die Beschichtung durch Tauchen des Tragkörpers in eine wäßrige Lösung von Palladiumnitrat imprägniert, erneut getrocknet und kalziniert. Nach dem Trocknen und Kalzinieren wies der Tragkörper eine Beschichtungskonzentration von ca. 218 g/l auf, die sich wie folgt zusammensetzte:

| | | |
|---|---|---|
| $La/Al_2O_3$ | | 100 g/l |
| $CeO_2/ZrO_2$ | | 30 g/l |
| CeO | ex Acetat | 30 g/l |
| $ZrO_2$ | ex Acetat | 30 g/l |
| BaO | ex Acetat | 20 g/l |
| NiO | | 4,3 g/l |
| Pd | | 3,8 g/l |

Die relative Anordnung der Bestandteile zueinander läßt sich wie folgt darstellen:

$$\left.\begin{array}{l} La/Al_2O_3 \\ CeO_2/ZrO_2 \\ NiO \end{array}\right\} + CeO_2 + ZrO_2 + BaO + Pd$$

**Vorversuch 2**

Im Unterschied zu Vorversuch 1 wurde Palladium vor Anfertigen der Beschichtungsdispersion auf dem stabilisierten Aluminiumoxid vorfixiert. Hierzu wurde die benötigte Menge des Aluminiumoxids nach der Methode der Porenvolumenimprägnierung mit einer wäßrigen Lösung von Palladiumnitrat imprägniert. Die fertige Beschichtung wies die selben Beschichtungsmengen wie im Vorversuch 1 auf. Die relative Anordnung der Bestandteile zueinander läßt sich wie folgt darstellen:

$$\left.\begin{array}{l} La/Al_2O_3 + Pd \\ CeO_2/ZrO_2 \\ NiO \end{array}\right\} + CeO_2 + ZrO_2 + BaO$$

**Vorversuch 3**

Im Unterschied zu Vorversuch 1 und Vorversuch 2 wurde Palladium je zur Hälfte auf Cer/Zirkon-Mischoxid und Aluminiumoxid vorfixiert. Die fertige Beschichtung wies die selben Beschichtungsmengen wie in Vorversuch 1 auf. Die relative Anordnung der Bestandteile läßt sich wie folgt darstellen:

$$\left.\begin{array}{l} La/Al_2O_3 + 0,5\ Pd \\ CeO_2/ZrO_2 + 0,5\ Pd \\ NiO \end{array}\right\} + CeO_2 + ZrO_2 + BaO$$

**Vorversuch 4**

Die Umsetzungsraten der Katalysatoren der drei Vorversuche 1 bis 3 für die Schadstoffe CO, HC, und $NO_X$ wurden nach Alterung an einem 1,8 l Ottomotor überprüft. Die Alterung erfolgte bei einer Bettemperatur (Temperatur des Katalysators) von 1000 °C für die Dauer von 40 Stunden. Die Umsetzungsraten wurden an einem Motorprüfstand bei einer Bettemperatur von 400°C und unterschiedlichen Luftzahlen $\lambda$ vermessen. Zur Simulation realer Bedingungen wurde die Luftzahl mit einer Frequenz von 1 Hz und Amplituden von ± 0,5 A/F (Air/Fuel-Verhältnis) und ± 1,0 A/F moduliert. Die Ergebnisse derr Messungen sind in den nachfolgenden Tabellen 2 und 3 aufgelistet. Die in den Tabellen wiedergegebenen Meßwerte sind Mittelwerte aus mindestens zwei Messungen. Sie zeigen, daß die erfindungsgemäße Anordnung der Bestandteile der Schicht im Katalysator von Vorversuch 1 deutliche Vorteile gegenüber den Anordnungen der Vorversuche 2 und 3 aufweist.

Tabelle 2: Motortest der Katalysatoren von Vorversuch 1 (VV1), Vorversuch 2 (VV2) und Vorversuch 3 (VV3) nach Motoralterung bei 1000°C für die Dauer von 4 Stunden; Abgastemperatur 400°C; Abgasmodulation: 1,0 Hz ± 0,5 A/F (Air/Fuel-Verhältnis)

| Vor- | λ = 0,993 | | | λ = 0,996 | | | λ = 0,999 | | | λ = 1,002 | | | λ = 1,006 | | |
|---|---|---|---|---|---|---|---|---|---|---|---|---|---|---|---|
| versuch | CO % | HC % | $NO_x$ % | CO % | HC % | $NO_x$ % | CO % | HC % | $NO_x$ % | CO % | HC % | $NO_x$ % | CO % | HC % | $NO_x$ % |
| VV1 | 58,8 | 89,6 | 72,9 | 62,5 | 90,2 | 66,6 | 63,4 | 90,5 | 63,2 | 65,4 | 90,6 | 57,7 | 67,9 | 90,5 | 55,9 |
| VV2 | 44,7 | 87,9 | 62,4 | 47,7 | 88,5 | 57,6 | 50,2 | 88,4 | 56,4 | 51,8 | 88,8 | 53,8 | 54,0 | 88,7 | 52,3 |
| VV3 | 27,5 | 77,9 | 44,9 | 29,8 | 78,8 | 41,7 | 31,5 | 78,6 | 41,4 | 32,2 | 79,8 | 39,9 | 32,8 | 80,3 | 39,7 |

Tabelle 3: Motortest der Katalysatoren von Vorversuch 1 (VV1) und Vorversuch 2 (VV2) und Vorversuch 3 (VV3) nach Motoralterung bei 1000°C für die Dauer von 4 Stunden; Abgastemperatur 400°C; Abgasmodulation: 1,0 Hz ± 1,0 A/F (Air/Fuel-Verhältnis)

| Vor- | λ = 0,993 | | | λ = 0,996 | | | λ = 0,999 | | | λ = 1,002 | | | λ = 1,006 | | |
|---|---|---|---|---|---|---|---|---|---|---|---|---|---|---|---|
| versuch | CO % | HC % | $NO_x$ % | CO % | HC % | $NO_x$ % | CO % | HC % | $NO_x$ % | CO % | HC % | $NO_x$ % | CO % | HC % | $NO_x$ % |
| VV1 | 63,1 | 88,4 | 77,3 | 68,4 | 88,5 | 77,3 | 85,3 | 91,3 | 73,9 | 91,7 | 91,4 | 62,8 | 93,7 | 91,4 | 57,7 |
| VV2 | 61,9 | 88,5 | 74,5 | 67,0 | 88,6 | 71,7 | 75,7 | 89,6 | 67,0 | 81,6 | 89,7 | 60,0 | 86,3 | 90,1 | 55,4 |
| VV3 | 36,7 | 66,3 | 34,8 | 36,2 | 67,1 | 36,1 | 52,3 | 81,8 | 46,1 | 57,7 | 83,7 | 44,9 | 63,9 | 85,7 | 43,4 |

**Vergleichsbeispiel**

Es wurde ein Katalysator auf einem Wabenkörper mit den obigen Abmessungen exakt nach den Angaben aus den Beispielen der WO 95/35152 hergestellt. Der fertige Katalysator enthielt die folgenden Beschichtungsmengen:

1. Schicht

| | |
|---|---|
| $Al_2O_3$ | 61,02 g/l |
| $NdO_2$ | 6,10 g/l |
| $La_2O_3$ | 4,58 g/l |
| $ZrO_2$ | 3,05 g/l |
| SrO | 15,26 g/l |
| $ZrO_2/CeO_2$ | 30,51 g/l |
| Pd | 3,25 g/l |
| Pt | 0,07 g/l |

Gemäß der Herstellvorschrift der WO 95/35152 wurde Palladium nur auf Aluminiumoxid und Platin nur auf dem Zirkon/Cer-Mischoxid mit einem Cergehalt von 20 Gew.-% abgeschieden. Die relative Anordnung der Bestandteile der Schicht läßt sich wie folgt darstellen:

$$\left.\begin{array}{ll} Al_2O_3 & + Pd \\ ZrO_2/CeO_2 & + Pt \end{array}\right\} + NdO_2 + La_2O_3 + ZrO_2 + SrO$$

2. Schicht

| | |
|---|---|
| $ZrO_2/CeO_2$ | 73,23 g/l |
| $Al_2O_3$ | 30,51 g/l |
| $ZrO_2$ | 4,58 g/l |
| Rh | 0,26 g/l |
| Pt | 0,18 g/l |

In der zweiten Schicht wurden Rhodium und Platin gemeinsam nur auf dem Zirkon/Cer-Mischoxid abgeschieden, welches auch in der ersten Schicht eingesetzt wurde.

Die relative Anordnung der Bestandteile dieser Schicht läßt sich wie folgt darstellen:

$$\left.\begin{array}{l} Al_2O_3 \\ ZrO_2/CeO_2 + Rh + Pt \end{array}\right\} + ZrO_2$$

Der Gesamtedelmetallgehalt der Beschichtung war:

$$Pt + Pd + Rh = 3{,}76\ g/l$$

mit Pt: 0,25 g/l; Pd: 3,25 g/l; Rh: 0,26 g/l

Das Gewichtsverhältnis der Platingruppenmetalle unter einander betrug somit Pt : Pd : Rh = 1 : 13 : 1,04.

**Beispiel 1**

Es wurde ein Katalysator auf einem gleichen Wabenkörper wie im Vergleichsbeispiel gemäß Anspruch 6 hergestellt. Zur Aufbringung der ersten Schicht wurde eine wäßrige Beschichtungsdispersion aus Aluminiumoxid und

Ceroxid (Mengenverhältnis $Al_2O_3 : CeO_2 = 3 : 2$) mit einem Feststoffgehalt von 55 Gew.-% und einer Dichte von 1,65 Kg/l hergestellt. Die Dispersion wurde in einer Mühle so lange homogenisiert, bis die mittlere Korngröße der Feststoffe etwa 2 - 3 µm betrug.

Der Wabenkörper wurde durch Tauchen in diese Dispersion beschichtet. Die Beschichtung wurde 1 Stunde bei 120°C getrocknet und anschließend für die Dauer von 2 Stunden bei 250°C kalziniert. Anschließend wurde die Beschichtung mit einer gemeinsamen Lösung von Palladiumnitrat und Bariumacetat imprägniert, erneut getrocknet und kalziniert. Die fertige erste Schicht enthielt die folgenden Beschichtungsmengen:

| | |
|---|---|
| $Al_2O_3$ | 120 g/l |
| $CeO_2$ | 80 g/l |
| BaO | 15 g/l |
| Pd | 1,18 g/l |

Die relative Anordnung der Bestandteile dieser Schicht läßt sich wie folgt darstellen:

| | |
|---|---|
| $Al_2O_3$<br>$CeO_2$ } | + BaO + Pd |

Zur Herstellung der Beschichtungsdispersion für die zweite Schicht wurde zunächst ein mit Lanthanoxid stabilisiertes Aluminiumoxid mit 2,4 Gew.-% Rhodium, bezogen auf das eingesetzte Aluminiumoxid, belegt. Hierzu wurde das stabilisierte Aluminiumoxid in Wasser dispergiert. Zu dieser Dispersion wurde eine Lösung von Rhodiumnitrat gegeben. Nach einer Sorptionszeit von 30 Minuten wurden ein Cer/Zirkon-Mischoxid und reines Aluminiumoxid zur Dispersion hinzugefügt. Die Mengen von stabilisiertem Aluminiumoxid, vom Mischoxid und vom reinen Aluminiumoxid standen in folgendem Verhältnis zueinander:

$La/Al_2O_3 : CeO_2/ZrO_2 : Al_2O_3 = 1 : 2 : 2$

Mit dieser Beschichtungsdispersion wurde der Wabenkörper ein zweites Mal beschichtet, getrocknet und kalziniert. Die zweite Schicht enthielt folgende Beschichtungsmengen:

| | |
|---|---|
| $La/Al_2O_3$ | 10 g/l |
| $CeO_2/ZrO_2$ | 20 g/l |
| $Al_2O_3$ | 20 g/l |
| Rh | 0,24 g/l |

Die relative Anordnung der Bestandteile dieser Schicht läßt sich wie folgt darstellen:

| | |
|---|---|
| $La/Al_2O_3$<br>$CeO_2/ZrO_2$<br>$Al_2O_3$ | + Rh |

Der Gesamtedelmetallgehalt der Beschichtung betrug

$$Pd + Rh = 1{,}42 \text{ g/l}$$

mit Pd : 1,18 g/l und Rh : 0,24 g/l
und einem Gewichtsverhältnis von

Pd : Rh = 5 : 1

**Beispiele 2 - 4**

Analog zu Beispiel 1 wurden weitere Katalysatoren mit unterschiedlichen Edelmetallbeladungen hergestellt.

| | | |
|---|---|---|
| Beispiel 2 | Pd + Rh = 1,98 g/l | Pd : Rh = 3 : 2 |
| Beispiel 3 | Pd + Rh = 2,37 g/l | Pd : Rh = 1 : 1 |
| Beispiel 4 | Pd + Rh = 2,93 g/l | Pd : Rh = 2 : 3 |

**Beispiel 5**

Es wurde ein Katalysator nach Anspruch 11 hergestellt.

Zur Anfertigung der ersten Schicht wurde zunächst eine wäßrige Lösung von Ceracetat und Zirkonacetat angefertigt. In dieser Lösung wurde stabilisiertes Aluminiumoxid dispergiert. Anschließend wurde eine Lösung von Bariumacetat hinzugefügt. Schließlich wurde noch das Cer/Zirkon-Mischoxid in dieser Dispersion dispergiert. Die Dispersion wurde entwässert, getrocknet und bei 500°C für die Dauer von 2 Stunden kalziniert.

Danach wurde das erhaltene Pulver erneut dispergiert und mit einer Mühle so lange homogenisiert, bis eine einheitliche Korngröße der feinteiligen Materialien von 2 - 3 µm erreicht war. Zu dieser Dispersion wurde eine Lösung von Palladiumnitrat gegeben. Anschließend wurde ein Wabenkörper durch Eintauchen in diese Dispersion beschichtet, getrocknet und bei 300°C für 2 Stunden kalziniert. Die fertige Schicht enthielt folgende Beschichtungsmengen:

| | |
|---|---|
| $La/Al_2O_3$ | 100 g/l |
| $CeO_2/ZrO_2$ | 30 g/l |
| $CeO_2$ | 30 g/l |
| $ZrO_2$ | 30 g/l |
| BaO | 20 g/l |
| Pd | 2,51 g/l |

Die relative Anordnung der Bestandteile läßt sich wie folgt darstellen:

$$\left.\begin{array}{l} La/Al_2O_3 \\ CeO_2/ZrO_2 \end{array}\right\} + CeO_2 + ZrO_2 + BaO + Pd$$

Zur Herstellung der zweiten Schicht wurde wie in Beispiel 1 vorgegangen. Statt des reinen Rhodiumnitrats wurde eine Mischung aus Rhodiumnitrat und Platinnitrat mit einem Gewichtsverhältnis von Rhodium zu Platin von 1 : 1 verwendet. Die zweite Schicht enthielt nach ihrer Fertigstellung folgende Beschichtungsmengen:

| | |
|---|---|
| $La/Al_2O_3$ | 10 g/l |
| $CeO_2/ZrO_2$ | 20 g/l |
| $Al_2O_3$ | 20 g/l |
| Rh | 0,16 g/l |
| Pt | 0,16 g/l |

Die relative Anordnung der Bestandteile läßt sich wie folgt darstellen:

| | |
|---|---|
| $La/Al_2O_3$<br>$CeO_2/ZrO_2$<br>$Al_2O_3$ | + Rh + Pt |

Der Gesamtedelmetallgehalt der Beschichtung betrug:

$$Pt + Pd + Rh = 2{,}83\ g/l$$

mit Pt : Pd : Rh = 1 : 16 : 1.

**Anwendungsbeispiel 1**

Die Katalysatoren des Vergleichsbeispiels und der Beispiele 1 bis 4 wurden zunächst bei 850°C Abgastemperatur am Katalysatoreintritt und für die Dauer von 160 Stunden an einem 1,8 l Ottomotor gealtert. Anschließend wurde ihre Schadstoffumsetzung über den MVEG-A-Fahrzyklus ermittelt. Die Ergebnisse sind in Tabelle 4 aufgelistet. Die Rohemissionen des Motors ohne Abgasentgiftung betrugen über den genannten Fahrzyklus:

CO: 7,29 g/Km; HC: 1,17 g/Km: $NO_x$: 2,88 g/Km

Tabelle 4

| Gemessene Schadstoffumsetzungen | | | | | | |
|---|---|---|---|---|---|---|
| **Katalysator** | **Verhältnis Pt/Pd/ Rh** | **Beladung [g/ l]** | **Kosten [%]** | **Emissionen [g/Km]** | | |
| | | | | **CO** | **HC** | **$NO_x$** |
| VB | 1/14/1 | 3,76 | 100 | 1,10 | 0,19 | 0,31 |
| B1 | 0/5/1 | 1,42 | 40 | 1,42 | 0,23 | 0,45 |
| B2 | 0/3/2 | 1,98 | 65 | 1,16 | 0,20 | 0,31 |
| B3 | 0/1/1 | 2,37 | 85 | 1,05 | 0,17 | 0,25 |
| B4 | 0/2/3 | 2,93 | 110 | 0,92 | 0,15 | 0,22 |
| VB: Vergleichsbeispiel; B1 Beispiel 1 | | | | | | |

In Tabelle 4 sind neben Edelmetallverhältnissen der Katalysatoren noch ihre Edelmetallbeladung sowie die zum Zeitpunkt der Patentanmeldung sich ergebenden Kosten für die Edelmetalle angegeben, bezogen auf den Katalysator des Vergleichsbeispiels als 100.

Tabelle 4 zeigt, daß der erfindungsgemäße Katalysator schon bei nur 65 % der Edelmetallkosten des Vergleichskatalysators dieselben Schadstoffumsetzungen aufweist wie dieser. Bei immer noch nur 85 % der Edelmetallkosten des Vergleichskatalysators liefert der erfindungsgemäße Katalysator deutlich bessere Leistungsdaten.

**Anwendungsbeispiel 2**

Die Schadstoffumsetzungen der Katalysatoren des Vergleichsbeispiels und von Beispiel 5 wurden nach unterschiedlich starker Alterung an einer Synthesegasanlage unter folgenden Prüfbedingungen gemessen:

| | |
|---|---|
| Bettemperatur | 400°C |
| Raumgeschwindigkeit | 50.000 $h^{-1}$ |
| Luftzahlen | $\lambda_1$ = 0,998 |
| | $\lambda_2$ = 1,000 |
| | $\lambda_3$ = 1,002 |

Die Messungen wurden bei drei verschiedenen Luftzahlen $\lambda_1$, $\lambda_2$ und $\lambda_3$ vorgenommen. Während der Messungen wurden die Luftzahlen mit einer Frequenz von 1 Hz und einer Amplitude von ± 0,8 A/F moduliert.

Für die Messungen standen zwei Sätze der Katalysatoren zur Verfügung, von denen einer für die Dauer von 7 Stunden bei einer Temperatur von 950°C an Luft und der zweite bei 1050°C an Luft gealtert wurden.

Die Ergebnisse der Messungen sind in den Tabellen 5 und 6 aufgelistet.

Tabelle 5

| Schadstoffumsetzungen nach Alterung für die Dauer von 7 Stunden bei 950°C | | | | | | | | | |
|---|---|---|---|---|---|---|---|---|---|
| **Kat.** | **λ = 0,998** | | | **λ = 1,000** | | | **λ = 1,002** | | |
| | **CO** | **HC** | **$NO_x$** | **CO** | **HC** | **$NO_x$** | **CO** | **HC** | **$NO_x$** |
| | **[%]** | **[%]** | **[%]** | **[%]** | **[%]** | **[%]** | **[%]** | **[%]** | **[%]** |
| VB | 97 | 100 | 98 | 99 | 99 | 96 | 100 | 97 | 91 |

Tabelle 5 (fortgesetzt)

| Schadstoffumsetzungen nach Alterung für die Dauer von 7 Stunden bei 950°C | | | | | | | | | |
|---|---|---|---|---|---|---|---|---|---|
| **Kat.** | **λ = 0,998** | | | **λ = 1,000** | | | **λ = 1,002** | | |
| | **CO** | **HC** | **$NO_x$** | **CO** | **HC** | **$NO_x$** | **CO** | **HC** | **$NO_x$** |
| | **[%]** | **[%]** | **[%]** | **[%]** | **[%]** | **[%]** | **[%]** | **[%]** | **[%]** |
| B1 | 95 | 99 | 98 | 97 | 99 | 97 | 99 | 99 | 94 |

Tabelle 6

| Schadstoffumsetzungen nach Alterung für die Dauer von 7 Stunden bei 1050°C | | | | | | | | | |
|---|---|---|---|---|---|---|---|---|---|
| **Kat.** | **λ = 0,998** | | | **λ = 1,000** | | | **λ = 1,002** | | |
| | **CO** | **HC** | **$NO_x$** | **CO** | **HC** | **$NO_x$** | **CO** | **HC** | **$NO_x$** |
| | **[%]** | **[%]** | **[%]** | **[%]** | **[%]** | **[%]** | **[%]** | **[%]** | **[%]** |
| VB | 78 | 92 | 86 | 81 | 92 | 84 | 84 | 91 | 83 |
| B1 | 89 | 95 | 96 | 94 | 95 | 93 | 95 | 94 | 87 |

Wie die beiden Tabellen zeigen, sind die Schadstoffumsetzungen beider Katalysatoren nach einer Alterung bei 950°C noch vergleichbar. Nach einer verschärften Alterung bei 1050°C liegt die Schadstoffumsetzung des Vergleichskatalysators jedoch wesentlich unter dem Niveau des erfindungsgemäßen Katalysators. Die bessere Alterungsstabilität wird dabei bei einem wesentlich geringeren Edelmetalleinsatz erreicht.

**Patentansprüche**

**1.** Abgasreinigungskatalysator für Verbrennungsmotoren mit zwei katalytisch aktiven Schichten auf einem Tragkörper, dessen erste auf dem Tragkörper befindliche Schicht mehrere feinteilige Feststoffe, ein oder mehrere hochdisperse Erdalkalimetalloxide sowie mindestens ein Platingruppenmetall enthält, wobei die feinteiligen Feststoffe wenigstens ein feinteiliges, Sauerstoff speicherndes Material sowie mindestens eine weitere feinteilige Komponente aufweisen und die Platingruppenmetalle mit allen Bestandteilen der ersten Schicht in enger Berührung stehen, wobei die zweite katalytisch aktive Schicht, welche mit dem Abgas direkt in Kontakt steht, ebenfalls mehrere feinteilige Feststoffe und mindestens ein Platingruppenelement enthält, wobei die feinteiligen Feststoffe dieser zweiten Schicht wenigstens ein feinteiliges, Sauerstoff speicherndes Material und wenigstens eine weitere feinteilige Komponente aufweisen und nur ein Teil dieser feinteiligen Feststoffe der zweiten Schicht als Träger für die Platingruppenmetalle der zweiten Schicht dienen.

**2.** Abgasreinigungskatalysator nach Anspruch 1,
**dadurch gekennzeichnet,**
**daß** in der ersten Schicht die Platingruppenmetalle Palladium und gegebenfalls Platin sind.

**3.** Abgasreinigungskatalysator nach Anspruch 1 oder 2,
**dadurch gekennzeichnet,**
**daß** als feinteilige, Sauerstoff speichernde Materialien in der ersten Schicht ein hochoberflächiges Ceroxid und in der zweiten Schicht ein Cer/Zirkon-Mischoxid verwendet werden, daß in beiden Schichten die feinteiligen Komponenten ein aktives Aluminiumoxid sind und daß die Platingruppenmetalle der zweiten Schicht Rhodium und gegebenenfalls Platin sind.

**4.** Abgasreinigungskatalysator nach Anspruch 3,
**dadurch gekennzeichnet,**
**daß** ein Teil des aktiven Aluminiumoxids der zweiten Schicht als Träger für Rhodium und gegebenenfalls Platin dient.

**5.** Abgasreinigungskatalysator nach Anspruch 4,

**dadurch gekennzeichnet,**
**daß** in der ersten Schicht als einziges Erdalkalimetalloxid Bariumoxid vorliegt und daß der als Träger für Rhodium und gegebenenfalls Platin dienende Teil des aktiven Aluminiumoxids stabilisiert ist.

**6.** Abgasreinigungskatalysator nach Anspruch 2,
**dadurch gekennzeichnet,**
**daß** die erste Schicht zusätzlich hochdisperses Ceroxid und hochdisperses Zirkonoxid enthält und die Platingruppenmetalle der ersten Schicht auch mit diesen Bestandteilen in enger Berührung stehen.

**7.** Abgasreinigungskatalysator nach Anspruch 6,
**dadurch gekennzeichnet,**
**daß** in beiden Schichten als feinteilige, Sauerstoff speichernde Materialien ein Cer/Zirkon-Mischoxid und als feinteilige Komponenten ein aktives Aluminiumoxid verwendet werden und daß die Platingruppenmetalle der zweiten Schicht Rhodium und gegebenenfalls Platin sind.

**8.** Abgasreinigungskatalysator nach Anspruch 7,
**dadurch gekennzeichnet,**
**daß** ein Teil des aktiven Aluminiumoxids der zweiten Schicht als Träger für Rhodium und gegebenenfalls Platin dient.

**9.** Abgasreinigungskatalysator nach Anspruch 8,
**dadurch gekennzeichnet,**
**daß** in der ersten Schicht als einziges Erdalkalimetalloxid Bariumoxid vorliegt und daß das aktive Aluminiumoxid der ersten Schicht sowie wenigstens der als Träger für Rhodium und gegebenenfalls Platin dienende Teil des aktiven Aluminiumoxids der zweiten Schicht stabilisiert ist.

**10.** Abgasreinigungskatalysator nach Anspruch 9,
**dadurch gekennzeichnet,**
**daß** in beiden Schichten das Cer/Zirkon-Mischoxid durch Praseodymoxid stabilisiert ist.

**11.** Abgasreinigungskatalysator nach Anspruch 10,
**dadurch gekennzeichnet,**
**daß** die erste Schicht als zusätzliches, Sauerstoff speicherndes Material ein feinteiliges Zirkon/Cer-Mischoxid enthält, wobei die Platingruppenmetalle der ersten Schicht auch mit diesem Material in enger Berührung stehen.

**12.** Abgasreinigungskatalysator nach Anspruch 7,
**dadurch gekennzeichnet,**
**daß** als Träger für Rhodium und gegebenenfalls Platin das Cer/Zirkon-Mischoxid der zweiten Schicht dient.

**13.** Abgasreinigungskatalysator nach Anspruch 12,
**dadurch gekennzeichnet,**
**daß** das Cer/Zirkon-Mischoxid der zweiten Schicht und gegebenenfalls auch das Cer/Zirkon-Mischoxid der ersten Schicht mit Praseodymoxid stabilisiert sind.

**14.** Abgasreinigungskatalysator nach Anspruch 13,
**dadurch gekennzeichnet,**
**daß** in der ersten Schicht als einziges Erdalkalimetalloxid Bariumoxid vorliegt und daß das aktive Aluminiumoxid der ersten Schicht und gegebenenfalls der zweiten Schicht stabilisiert sind.

**15.** Abgasreinigungskatalysator nach einem der Ansprüche 3 bis 14,
**dadurch gekennzeichnet,**
**daß** in der zweiten Schicht das Massenverhältnis der als Träger für die Platingruppenmetalle dienenden Feststoffanteile zu den restlichen Feststoffanteilen der zweiten Schicht zwischen 1 : 10 und 5 : 1, bevorzugt zwischen 1 : 4 und 1 : 1 liegt.

**16.** Abgasreinigungskatalysator nach Anspruch 15,
**dadurch gekennzeichnet,**
**daß** die erste und gegebenenfalls die zweite Schicht als zusätzliche feinteilige Komponenten Nickeloxid enthalten.

**17.** Abgasreinigungskatalysator nach Anspruch 16,
**dadurch gekennzeichnet,**
**daß** der Tragkörper,auf den beide Schichten aufgebracht sind, ein inerter Wabenkörper aus Keramik oder Metall ist, wobei die Beschichtungsmenge der ersten Schicht 100 bis 300 und die Beschichtungsmenge der zweiten Schicht 40 bis 150 Gramm pro Liter Tragkörpervolumen betragen.

**18.** Abgasreinigungskatalysator nach Anspruch 17,
**dadurch gekennzeichnet,**
**daß** die Beschichtungsmenge der zweiten Schicht nur 25 bis 75, bevorzugt 30 bis 50 %, der Beschichtungsmenge der ersten Schicht beträgt.

**19.** Abgasreinigungskatalysator nach Anspruch 18,
**dadurch gekennzeichnet,**
**daß** in der ersten Schicht die mindesten eine feinteilige Komponente in einer Konzentration von 60 bis 150, jedes der feinteiligen, Sauerstoff speichernden Materialien in einer Konzentration von 20 bis 100, das Erdalkalimetalloxid in einer Konzentration von 10 bis 40 und das gegebenenfalls anwesende hochdisperse Ceroxid und Zirkonoxid jeweils in einer Konzentration von 10 bis 70 Gramm pro Liter Tragkörpervolumen vorliegen und daß in der zweiten Schicht die mindestens eine feinteilige Komponente in einer Konzentration von 5 bis 100 und jedes der feinteiligen, Sauerstoff speichernden Materialien in einer Konzentration von 5 bis 70 Gramm pro Liter Tragkörpervolumen vorliegen.

**20.** Abgasreinigungskatalysator nach Anspruch 19,
**dadurch gekennzeichnet,**
**daß** die Platingruppenmetalle der ersten Schicht in einer Konzentration von 0,1 bis 5 Gew.-%, bezogen auf das Gesamtgewicht der ersten Schicht, und die Platingruppenmetalle der zweiten Schicht in einer Konzentration von 0,1 bis 10, bevorzugt von 0,1 bis 5 Gew.-%, bezogen auf das jeweilige Trägermaterial, vorliegen.

**21.** Verfahren zur Herstellung eines Abgasreinigungskatalysators nach Anspruch 2, welches folgende Schritte enthält:

a) Anfertigen einer wäßrigen Beschichtungsdispersion aus den feinteiligen Feststoffen der ersten Schicht;
b) Beschichten des Tragkörpers mit dieser Dispersion und Trocknen und Kalzinieren der Beschichtung;
c) Imprägnieren der Beschichtung mit einer wäßrigen Lösung von Vorläuferverbindungen der Platingruppenmetalle der ersten Schicht und des Erdalkalimetalloxids und Trocknen und Kalzinieren der Beschichtung;
d) Anfertigen einer wäßrigen Dispersion mit dem als Träger für die Platingruppenmetalle der zweiten Schicht vorgesehenen Anteil der feinteiligen Feststoffe der zweiten Schicht;
e) Hinzufügen einer wäßrigen Lösung der vorläuferverbindungen der Platingruppenmetalle der zweiten Schicht zu der wäßrigen Dispersion von Schritt d);
f) nach einer Sorptionszeit von wenigstens 30 Minuten Fertigstellen der Beschichtungsdispersion für die zweite Schicht durch Dispergieren der restlichen Anteile der feinteiligen Feststoffe der zweiten Schicht in der wäßrigen Dispersion von Schritt e);
g) Beschichten des schon mit der ersten Schicht versehenen Tragkörpers mit der Beschichtungsdispersion von Schritt f) sowie Trocknen und gegebenenfalls Kalzinieren.

**22.** Verfahren zur Herstellung eines Abgasreinigungskatalysators nach Anspruch 2, welches folgende Schritte enthält:

a) Anfertigen einer wäßrigen Beschichtungsdispersion aus den feinteiligen Feststoffen der ersten Schicht unter Zugabe einer wäßrigen Lösung von Vorläuferverbindungen des Erdalkalimetalloxids;
b) Beschichten des Tragkörpers mit dieser Dispersion und Trocknen und Kalzinieren der Beschichtung;
c) Imprägnieren der Beschichtung mit einer wäßrigen Lösung von Vorläuferverbindungen der Platinaruppenmetalle der ersten Schicht sowie Trocknen und Kalzineren der ersten Schicht;
d) Fertigstellen des Katalysators durch Aufbringen der zweiten Beschichtung gemäß den Verfahrensschritten d) bis g) von Anspruch 21.

**23.** Verfahren zur Herstellung eines Abgasreinigungskatalysators nach Anspruch 2, welches folgende Schritte enthält:

a) Anfertigen einer wäßrigen Beschichtungsdispersion aus den feinteiligen Feststoffen der ersten Schicht unter Zugabe einer wäßrigen Lösung von Vorläuferverbindungen des Erdalkalimetalloxids und der Vorläuferverbindung der Platingruppenmetalle der ersten Schicht;

b) Beschichten des Tragkörpers mit dieser Dispersion und Trocknen und Kalzinieren der Beschichtung;
c) Fertigstellen des Katalysators durch Aufbringen der zweiten Beschichtung gemäß den Verfahrensschritten d) bis g) von Anspruch 21.

**24.** Verfahren zur Herstellung eines Abgasreinigungskatalysators nach Anspruch 6, welches folgende Schritte enthält:

a) Anfertigen einer wäßrigen Beschichtungsdispersion aus allen feinteiligen Feststoffen der ersten Schicht und den löslichen Vorläuferverbindungen des Ceroxids, Zirkonoxids und des Erdalkalimetalloxids sowie der Vorläuferverbindungen der Platingruppenmetalle;
b) Beschichten des Tragkörpers mit dieser Dispersion und Trocknen und Kalzinieren der Beschichtung;
c) Fertigstellen des Katalysators durch Aufbringen der zweiten Beschichtung gemäß den Verfahrensschritten d) bis g) von Anspruch 21.

**25.** Verfahren zur Herstellung eines Abgasreinigungskatalysators nach Anspruch 6, welches folgende Schritte enthält:

a) Anfertigen einer wäßrigen Beschichtungsdispersion aus den feinteiligen Feststoffen der ersten Schicht und den löslichen Vorläuferverbindungen des Ceroxids, Zirkonoxids und des Erdalkalimetalloxids;
b) Beschichten des Tragkörpers mit der Beschichtungsdispersion und Trocknen und Kalzinieren der Beschichtung;
c) Imprägnieren der Beschichtung mit einer wäßrigen Lösung von Vorläuferverbindungen der Platingruppenmetalle der ersten Schicht und Trocknen und Kalzinieren der Beschichtung;
d) Fertigstellen des Katalysators durch Aufbringen der zweiten Beschichtung gemäß den Verfahrensschritten d) bis g) von Anspruch 21.

**26.** Verfahren zur Herstellung eines Abgasreinigungskatalysators nach Anspruch 6, welches folgende Schritte enthält:

a) Imprägnieren der feinteiligen Feststoffe der ersten Schicht mit den Vorläuferverbindungen des Ceroxids, Zirkonoxids und des Erdalkalimetalloxids sowie abschließendes Trocknen und Kalzinieren;
b) Anfertigen einer wäßrigen Beschichtungsdispersion aus dem Pulvermaterial von Schritt a);
c) Beschichten des Tragkörpers mit dieser Dispersion und Trocknen und Kalzinieren der Beschichtung;
d) Imprägnieren der Beschichtung mit einer wäßrigen Lösung von Vorläuferverbindungen der Platingruppenmetalle der ersten Schicht sowie Trocknen und Kalzinieren der ersten Beschichtung;
e) Fertigstellen des Katalysators durch Aufbringen der zweiten Beschichtung gemäß den Verfahrensschritten d) bis g) von Anspruch 21.

## Claims

**1.** An exhaust gas treatment catalyst for internal combustion engines with two catalytically active layers on a support structure, the first layer applied to the support structure containing several finely divided solids, one or more highly dispersed alkaline earth metal oxides and at least one platinum group metal, wherein the finely divided solids comprise at least one finely divided oxygen-storing material and at least one other finely divided component and the platinum group metals are in close contact with all the constituents in the first layer, wherein the second catalytically active layer, which is in direct contact with the exhaust gas, also contains several finely divided solids and at least one platinum group metal, wherein the finely divided solids in this second layer comprise at least one finely divided oxygen-storing material and at least one other finely divided component and only some of these finely divided solids in the second layer are used as a support for the platinum group metals in the second layer.

**2.** Exhaust gas treatment catalyst as claimed in Claim 1, wherein the platinum group metals in the first layer are palladium and optionally platinum.

**3.** Exhaust gas treatment catalyst as claimed in Claim 1 or 2, wherein a high surface area cerium oxide is used in the first layer and a cerium/zirconium mixed oxide is used in the second layer as finely divided oxygen-storing materials, that the finely divided component in both layers is an active aluminium oxide and that the platinum group metals in the second layer are rhodium and optionally platinum.

**4.** Exhaust gas treatment catalyst as claimed in Claim 3, wherein some of the active aluminium oxide in the second layer is used as a support for rhodium and optionally platinum.

**5.** Exhaust gas treatment catalyst as claimed in Claim 4, wherein barium oxide is present in the first layer as the only alkaline earth metal oxide and that the share of active aluminium oxide used as support for rhodium and optionally platinum is stabilised.

**6.** Exhaust gas treatment catalyst as claimed in Claim 2, wherein the first layer contains additional highly dispersed cerium oxide and highly dispersed zirconium oxide and the platinum group metals in the first layer are also in close contact with these constituents.

**7.** Exhaust gas treatment catalyst as claimed in Claim 6, wherein a cerium/zirconium mixed oxide is used as a finely divided oxygen-storing material in both layers and an active aluminium oxide is used as a finely divided component in both layers and that the platinum group metals in the second layer are rhodium and optionally platinum.

**8.** Exhaust gas treatment catalyst as claimed in Claim 7, wherein some of the active aluminium oxide in the second layer is used as a support for rhodium and optionally platinum.

**9.** Exhaust gas treatment catalyst as claimed in Claim 8, wherein barium oxide is present in the first layer as the only alkaline earth metal oxide and that the active aluminium oxide in the first layer and at least the share of active aluminium oxide used as a support for rhodium and optionally platinum in the second layer is stabilised.

**10.** Exhaust gas treatment catalyst as claimed in Claim 9, wherein the cerium/zirconium mixed oxide in both layers is stabilised by praseodymium oxide.

**11.** Exhaust gas treatment catalyst as claimed in Claim 10, wherein the first layer contains a finely divided zirconium/cerium mixed oxide as an additional oxygen-storing material, wherein the platinum group metals in the first layer are also in close contact with this material.

**12.** Exhaust gas treatment catalyst as claimed in Claim 7, wherein the cerium/zirconium mixed oxide in the second layer is used as a support for rhodium and optionally platinum.

**13.** Exhaust gas treatment catalyst as claimed in Claim 12, wherein the cerium/zirconium mixed oxide in the second layer and optionally also the cerium/zirconium mixed oxide in the first layer are stabilised with praseodymium oxide.

**14.** Exhaust gas treatment catalyst as claimed in Claim 13, wherein barium oxide is present in the first layer as the only alkaline earth metal oxide and that the active aluminium oxide in the first layer and optionally in the second layer are stabilised.

**15.** Exhaust gas treatment catalyst as claimed in one of Claims 3 to 14, wherein, in the second layer, the ratio by weight of the solids used as a support for the platinum group metals to the remaining amount of solids in the second layer is between 1 : 10 and 5 : 1, preferably between 1 : 4 and 1 : 1.

**16.** Exhaust gas treatment catalyst as claimed in Claim 15, wherein the first and optionally the second layer contain nickel oxide as an additional finely divided component.

**17.** Exhaust gas treatment catalyst as claimed in Claim 16, wherein the support structure onto which the two layers are applied is an inert honeycomb structure made of ceramic or metal, wherein the amount of coating in the first layer is 100 to 300 and the amount of coating in the second layer is 40 to 150 grams per litre of support structure volume.

**18.** Exhaust gas treatment catalyst as claimed in Claim 17, wherein the amount of coating in the second layer is only 25 to 75, preferably 30 to 50 %, of the amount of coating in the first layer.

**19.** Exhaust gas treatment catalyst as claimed in Claim 18, wherein, in the first layer, the at least one finely divided component is present at a concentration of 60 to 150, each of the finely divided oxygen-storing materials is present at a concentration of 20 to 100, the alkaline earth metal oxide is present at a concentration of 10 to 40 and the optionally present highly dispersed cerium oxide and zirconium oxide are each present at a concentration of 10 to 70 grams per litre of support structure volume and that, in the second layer, the at least one finely divided component is present at a concentration of 5 to 100 and each of the finely divided oxygen-storing materials is present at a concentration of 5 to 70 grams per litre of support structure volume.

**20.** Exhaust gas treatment catalyst as claimed in Claim 19, wherein the platinum group metals in the first layer are present at a concentration of 0.1 to 5 wt.%, with reference to the total weight of the first layer, and the platinum group metals in the second layer are present at a concentration of 0.1 to 10, preferably 0.1 to 5 wt.%, with reference to the relevant support material.

**21.** Process for preparing an exhaust gas treatment catalyst as claimed in Claim 2, which comprises the following steps:

a) making up an aqueous coating dispersion of the finely divided solids in the first layer;
b) coating the support structure with this dispersion and drying and calcining the coating;
c) impregnating the coating with an aqueous solution of precursor compounds of the platinum group metals in the first layer and of the alkaline earth metal oxide and drying and calcining the coating;
d) making up an aqueous dispersion with the share of finely divided solids in the second layer intended as a support for the platinum group metals in the second layer;
e) adding an aqueous solution of precursor compounds of the platinum group metals in the second layer to the aqueous dispersion from step d);
f) after a sorption time of at least 30 minutes, completing the coating dispersion for the second layer by dispersing the remaining finely divided solids in the second layer in the aqueous dispersion from step e);
g) coating the support structure already provided with the first layer with the coating dispersion from step f) and drying and optionally calcining.

**22.** Process for preparing an exhaust gas treatment catalyst as claimed in Claim 2, which comprises the following steps:

a) making up an aqueous coating dispersion from the finely divided solids in the first layer while adding an aqueous solution of precursor compounds of the alkaline earth metal oxide;
b) coating the support structure with this dispersion and drying and calcining the coating;
c) impregnating the coating with an aqueous solution of precursor compounds of the platinum group metals in the first layer and drying and calcining the first layer;
d) completing the catalyst by applying the second coating in accordance with process steps d) to g) from Claim 21.

**23.** Process for preparing an exhaust gas treatment catalyst as claimed in Claim 2, which comprises the following steps:

a) making up an aqueous coating dispersion of the finely divided solids in the first layer while adding an aqueous solution of precursor compounds of the alkaline earth metal oxide and the precursor compound of the platinum group metals in the first layer;
b) coating the support structure with this dispersion and drying and calcining the coating;
c) completing the catalyst by applying the second coating in accordance with process steps d) to g) in Claim 21.

**24.** Process for preparing an exhaust gas treatment catalyst as claimed in Claim 6, which comprises the following steps:

a) making up an aqueous coating dispersion of all the finely divided solids in the first layer and soluble precursor compounds of cerium oxide, zirconium oxide and the alkaline earth metal oxide and precursor compounds of the platinum group metals;
b) coating the support structure with this dispersion and drying and calcining the coating;
c) completing the catalyst by applying the second coating in accordance with process steps d) to g) in Claim 21.

**25.** Process for preparing an exhaust gas treatment catalyst as claimed in Claim 6, which comprises the following steps:

a) making up an aqueous coating dispersion of the finely divided solids in the first layer and soluble precursor compounds of cerium oxide, zirconium oxide and the alkaline earth metal oxide;
b) coating the support structure with the coating dispersion and drying and calcining the coating;
c) impregnating the coating with an aqueous solution of precursor compounds of the platinum group metals in the first layer and drying and calcining the coating;
d) completing the catalyst by applying the second coating in accordance with process steps d) to g) in Claim 21.

**26.** Process for preparing an exhaust gas treatment catalyst as claimed in Claim 6, which comprises the following steps:

a) impregnating the finely divided solids in the first layer with precursor compounds of cerium oxide, zirconium

oxide and alkaline earth metal oxide and then drying and calcining;
b) making up an aqueous coating dispersion of the powdered material from step a);
c) coating the support structure with this dispersion and drying and calcining the coating;
d) impregnating the coating with an aqueous solution of precursor compounds of the platinum group metals in the first layer and drying and calcining the first coating;
e) completing the catalyst by applying the second coating in accordance with process steps d) to g) in Claim 21.

**Revendications**

1. Catalyseur d'épuration des gaz d'échappement de moteurs à combustion, contenant deux couches catalytiquement actives sur un corps de support, dont la première couche située sur le corps de support contient plusieurs substances solides à particules fines, un ou plusieurs oxydes métalliques alcalinoterreux fortement dispersés ainsi qu'au moins un métal du groupe du platine, les substances solides à particules fines présentant au moins un matériau à particules fines stockant de l'oxygène ainsi qu'au moins un autre composant à particules fines, et les métaux du groupe du platine étant en contact étroit avec tous les composants de la première couche,

   - dans lequel la deuxième couche catalytiquement active, qui est en contact direct avec les gaz d'échappement, contient également plusieurs substances solides à particules fines et au moins un élément du groupe du platine, les substances solides à particules fines de cette deuxième couche présentant au moins un matériau à particules fines stockant de l'oxygène et au moins un autre composant à particules fines, et une partie seulement de ces substances solides à particules fines de la deuxième couche sert de support aux métaux du groupe du platine de la deuxième couche.

2. Catalyseur d'épuration de gaz d'échappement selon la revendication 1,
   **caractérisé en ce que**
   dans la première couche les métaux du groupe du platine sont le palladium et le cas échéant le platine.

3. Catalyseur d'épuration de gaz d'échappement selon la revendication 1 ou 2,
   **caractérisé en ce que**
   comme matériaux à particules fines stockant de l'oxygène, on utilise dans la première couche un oxyde cérique hautement surfacique et dans la deuxième couche, un oxyde cérique/zirconique mixte, dans les deux couches les composants à particules fines sont un oxyde d'aluminium actif, et les métaux du groupe du platine de la deuxième couche sont le rhodium et le cas échéant le platine.

4. Catalyseur d'épuration de gaz d'échappement selon la revendication 3,
   **caractérisé en ce qu'**
   une partie de l'oxyde d'aluminium actif de la deuxième couche sert de support au rhodium et le cas échéant au platine.

5. Catalyseur d'épuration de gaz d'échappement selon la revendication 4,
   **caractérisé en ce que**
   comme seul oxyde métallique alcalinoterreux, la première couche contient de l'oxyde de baryum, et la partie de l'oxyde d'aluminium actif servant de support au rhodium et le cas échéant au platine est stabilisée.

6. Catalyseur d'épuration de gaz d'échappement selon la revendication 2,
   **caractérisé en ce que**
   la première couche contient également de l'oxyde cérique hautement dispersé et de l'oxyde zirconique hautement dispersé, et les métaux du groupe du platine de la première couche sont en contact étroit également avec ces composants.

7. Catalyseur d'épuration de gaz d'échappement selon la revendication 6,
   **caractérisé en ce que**
   dans les deux couches, comme matériaux à particules fines stockant de l'oxygène on utilise un oxyde de cérique/zirconique mixte et comme composants à particules fines un oxyde d'aluminium actif, et les métaux du groupe du platine de la deuxième couche sont le rhodium et le cas échéant le platine.

8. Catalyseur d'épuration de gaz d'échappement selon la revendication 7,

**caractérisé en ce qu'**
une partie de l'oxyde d'aluminium actif de la deuxième couche sert de support au rhodium et le cas échéant au platine.

**9.** Catalyseur d'épuration de gaz d'échappement selon la revendication 8,
**caractérisé en ce que**
comme seul oxyde métallique alcalinoterreux la première couche contient de l'oxyde de baryum, et l'oxyde d'aluminium actif de la première couche ainsi que la partie de l'oxyde d'aluminium actif servant de support au rhodium et le cas échéant au platine de la deuxième couche est stabilisée.

**10.** Catalyseur d'épuration de gaz d'échappement selon la revendication 9,
**caractérisé en ce que**
dans les deux couches, l'oxyde cérique/zirconique mixte est stabilisé par de l'oxyde de praséodyme.

**11.** Catalyseur d'épuration de gaz d'échappement selon la revendication 10,
**caractérisé en ce que**
comme matériau stockant de l'oxygène supplémentaire, la première couche contient un oxyde zirconique/cérique mixte à particules fines, les métaux du groupe du platine de la première couche étant également en contact étroit avec ce matériau.

**12.** Catalyseur d'épuration de gaz d'échappement selon la revendication 7,
**caractérisé en ce que**
l'oxyde cérique/zirconique mixte de la deuxième couche sert de support au rhodium et le cas échéant au platine.

**13.** Catalyseur d'épuration de gaz d'échappement selon la revendication 12,
**caractérisé en ce que**
l'oxyde cérique/zirconique mixte de la deuxième couche et le cas échéant également l'oxyde cérique/zirconique mixte de la première couche sont stabilisés par de l'oxyde de praséodyme.

**14.** Catalyseur d'épuration de gaz d'échappement selon la revendication 13,
**caractérisé en ce que**
comme seul oxyde métallique alcalinoterreux la première couche contient de l'oxyde de baryum, et l'oxyde d'aluminium actif de la première couche et le cas échéant de la deuxième couche est stabilisé.

**15.** Catalyseur d'épuration de gaz d'échappement selon l'une quelconque des revendications 3 à 14,
**caractérisé en ce que**
dans la deuxième couche le rapport massique des parties de substances solides servant de support aux métaux du groupe du platine par rapport aux parties de substances solides restantes de la deuxième couche se situe entre 1 : 10 et 5 : 1, de préférence entre 1 : 4 et 1 : 1.

**16.** Catalyseur d'épuration de gaz d'échappement selon la revendication 15,
**caractérisé en ce que**
la première et le cas échéant la deuxième couche contiennent de l'oxyde de nickel comme composants à particules fines supplémentaires.

**17.** Catalyseur d'épuration de gaz d'échappement selon la revendication 16,
**caractérisé en ce que**
le corps de support sur lequel les deux couches sont appliquées est un corps alvéolé inerte en céramique ou en métal, la quantité d'enduction de la première couche étant de 100 à 300 et celles de la deuxième couche de 40 à 150 grammes par litre de volume du corps de support.

**18.** Catalyseur d'épuration de gaz d'échappement selon la revendication 17,
**caractérisé en ce que**
la quantité d'enduction de la deuxième couche ne correspond qu'à 25 à 75, de préférence à 30 à 50 % de la quantité d'enduction de la première couche.

**19.** Catalyseur d'épuration de gaz d'échappement selon la revendication 18,
**caractérisé en ce que**

la première couche contient l'au moins un composant à particules fines dans une concentration de 60 à 150, chacun des matériaux à particules fines stockant de l'oxygène dans une concentration de 20 à 100, l'oxyde métallique alcalinoterreux dans une concentration de 10 à 40 et le cas échéant les oxydes cérique et zirconiques fortement dispersés chacun dans une concentration de 10 à 70 grammes par litre de volume du corps de support, et la deuxième couche contient au moins un composant à particules fines dans une concentration de 5 à 100 et chacun des matériaux à particules fines stockant de l'oxygène dans une concentration de 5 à 70 grammes par litre de volume du corps de support.

**20.** Catalyseur d'épuration de gaz d'échappement selon la revendication 19,
**caractérisé en ce que**
les métaux du groupe du platine de la première couche sont présents dans une concentration de 0,1 à 5 % en poids par rapport au poids total de la première couche et les métaux du groupe du platine de la deuxième couche dans une concentration de 0,1 à 10, de préférence de 0,1 à 5 % en poids par rapport au matériau de support respectif.

**21.** °) Procédé de réalisation d'un catalyseur d'épuration de gaz d'échappement selon la revendication 2 comprenant les étapes suivantes :

a) préparation d'une dispersion d'enduction aqueuse à partir de substances solides à particules fines de la première couche ;
b) enduction du corps de support avec cette dispersion, séchage et calcination de l'enduction ;
c) imprégnation de l'enduction avec une solution aqueuse de composés précurseurs des métaux du groupe du platine de la première couche et de l'oxyde métallique alcalinoterreux, séchage et calcination de l'enduction ;
d) préparation d'une dispersion aqueuse avec la partie des substances solides à particules fines de la deuxième couche prévue comme support pour les métaux du groupe du platine de la deuxième couche ;
e) ajout d'une solution aqueuse des composés précurseurs des métaux du groupe du platine de la deuxième couche à la dispersion aqueuse de l'étape d) ;
f) après un temps de sorption d'au moins 30 minutes, achèvement de la dispersion d'enduction pour la deuxième couche par dispersion des parties restantes des substances solides à particules fines de la deuxième couche dans la dispersion aqueuse de l'étape e) ;
g) enduction du corps de support déjà muni de la première couche avec la dispersion d'enduction de l'étape f), séchage et le cas échéant calcination.

**22.** Procédé de réalisation d'un catalyseur d'épuration de gaz d'échappement selon la revendication 2 comprenant les étapes suivantes:

a) préparation d'une dispersion d'enduction aqueuse à partir des substances solides de la première couche en ajoutant une solution aqueuse de composés précurseurs de l'oxyde métallique alcalinoterreux ;
b) enduction du corps de support avec cette dispersion, séchage et calcination de l'enduction ;
c) imprégnation de l'enduction avec une solution aqueuse de composés précurseurs des métaux du groupe du platine de la première couche, séchage et calcination de la première couche ;
d) achèvement du catalyseur par application de la deuxième enduction selon les étapes opérationnelles d) à g) de la revendication 21.

**23.** Procédé de réalisation d'un catalyseur d'épuration de gaz d'échappement selon la revendication 2 comprenant les étapes suivantes :

a) préparation d'une dispersion d'enduction aqueuse à partir de substances solides à particules fines de la première couche en ajoutant une solution aqueuse de composés précurseurs de l'oxyde métallique alcalinoterreux et du composé précurseur des métaux du groupe du platine de la première couche ;
b) enduction du corps de support avec cette dispersion, séchage et calcination de l'enduction ;
c) achèvement du catalyseur par application de la deuxième enduction selon les étapes opérationnelles d) à g) de la revendication 21.

**24.** Procédé de réalisation d'un catalyseur d'épuration de gaz d'échappement selon la revendication 6 comprenant les étapes suivantes :

a) préparation d'une dispersion d'enduction aqueuse à partir de toutes les substances solides à particules fines de la première couche et des composés précurseurs solubles de l'oxyde cérique, de l'oxyde zirconique et de l'oxyde métallique alcalinoterreux ainsi que des composés précurseurs des métaux du groupe du platine ;
b) enduction du corps de support avec cette dispersion, séchage et calcination de l'enduction ;
c) achèvement du catalyseur par application de la deuxième enduction selon les étapes opérationnelles d) à g) de la revendication 21.

**25.** Procédé de réalisation d'un catalyseur d'épuration de gaz d'échappement selon la revendication 6 comprenant les étapes suivantes :

a) préparation d'une dispersion d'enduction aqueuse à partir des substances solides à particules fines de la première couche et des composés précurseurs solubles de l'oxyde cérique, de l'oxyde zirconique et de l'oxyde métallique alcalinoterreux ;
b) enduction du corps de support avec la dispersion d'enduction, séchage et calcination de l'enduction ;
c) imprégnation de l'enduction avec une solution aqueuse de composés précurseurs des métaux du groupe du platine de la première couche, séchage et calcination de l'enduction ;
d) achèvement du catalyseur par application de la deuxième enduction selon les étapes opérationnelles d) à g) de la revendication 21.

**26.** Procédé de réalisation d'un catalyseur d'épuration de gaz d'échappement selon la revendication 6 comprenant les étapes suivantes :

a) imprégnation des substances solides à particules fines de la première couche avec les composés précurseurs de l'oxyde cérique, de l'oxyde zirconique et de l'oxyde métallique alcalinoterreux, séchage et calcination finaux ;
b) préparation d'une dispersion d'enduction aqueuse à partir du matériau poudreux de l'étape a) ;
c) enduction du corps de support avec cette dispersion, séchage et calcination de l'enduction ;
d) imprégnation de l'enduction avec une solution aqueuse de composés précurseurs des métaux du groupe du platine de la première couche, séchage et calcination de la première enduction ;
e) achèvement du catalyseur par application de la deuxième enduction selon les étapes opérationnelles d) à g) de la revendication 21.